# EUROPÄISCHE PATENTSCHRIFT

(11) **EP 0 731 881 B1**
(45) Veröffentlichungstag und Bekanntmachung des Hinweises auf die Patenterteilung: **16.06.1999**
(21) Anmeldenummer: 95934080.3
(22) Anmeldetag: 20.09.1995
(51) Int. Cl.: F16B 13/06

(54) **SPREIZANKER**
EXPANDING ANCHOR DEVICE
DISPOSITIF D'ANCRAGE EXTENSIBLE

(30) Priorität: 05.10.1994 DE 4435628
(43) Veröffentlichungstag der Anmeldung: 18.09.1996
(73) Patentinhaber: UPAT GMBH & CO, D-79312 Emmendingen (DE)
(72) Erfinder: FRISCHMANN, Albert, D-79341 Kenzingen (DE); STEURER, Paul, D-79331 Teningen (DE); ANISI, Aboulhassan, D-67707 Schopp (DE)
(86) Internationale Anmeldenummer: EP9503706
(87) Internationale Veröffentlichungsnummer: WO9611343

(56) Entgegenhaltungen:
- CA-A- 1 234 711
- CH-A- 263 008
- CH-A- 591 637
- DE-C- 4 117 238
- GB-A- 1 364 234
- US-A- 3 766 819

## Beschreibung

Die Erfindung betrifft einen Spreizanker aus Metall zur Verankerung in einem Bohrloch eines Bauteils gemäß der Gattung des Anspruchs 1.

Derartige Spreizanker sind insbesondere für den Einsatz in harten Baustoffen geeignet, wobei durch Aufdrehen einer Mutter auf den das Bauteil und den zu befestigenden Gegenstand überragenden Gewindeschaft der am Schaft angeformte Spreizkonus in die an der Bohrlochwandung sich abstützende Spreizhülse eingezogen wird. Die Spreizhülse weitet sich dabei auf und verkeilt im Bohrloch. Die Abstützung der Spreizhülse im Bohrloch wird durch an ihr angeformte Sperrelemente erreicht, die sich an der Bohrlochwandung verkrallen.

Aus der DE PS 41 17 238 ist ein derartiger Spreizanker mit zwei Konen, über die jeweils eine Spreizhülse aufgesetzt ist, bekannt. Die Spreizhülse ist mit tunnelartigen, nach außen gewölbten Sicken, die sich bis etwa zur Mitte der Spreizhülse erstrecken, sowie einem durchgehenden Längsschlitz und mehreren axialangeordneten Einschnitten versehen.

Dieser bekannte Spreizanker ermöglicht zwar eine schlupffreie Verankerung, verlangt jedoch Einsatz von größerer Einschlagenergie, um den Setzwiderstand zu überwinden.

Die Untersuchungen haben gezeigt, daß der relativ steife Sickenmantel sich auf das Setzverhalten des Ankers negativ auswirkt. Der Grund dafür ist in dem zu sehen, daß der Sickenmantel zwei unterschiedliche Bereiche aufweist und zwar einen hinteren, der während des Setzens des Ankers sich elastisch verhält und einen vorderen steifen Bereich. Der steife Bereich der Sicke bewirkt hohe Pressung und somit große Reibung zum Beton und erschwert das Einschlagen des Ankers ins Bohrloch.

Der Erfindung liegt die Aufgabe zugrunde, einen Spreizanker der eingangs genannten Art zu schaffen, der sich leichter setzen läßt und eine sichere Befestigung in der Zugzone eines Betonteils gewährleistet.

Die Lösung dieser Aufgabe wird durch die in Anspruch 1 angegebenen Merkmale erreicht.

Durch das Einbringen einer Durchbrechung im Sickenbereich wird die Steifigkeit der Sicke reduziert. Insbesondere durch die Abnahme der Fläche in dem steifen Bereich der Sicke wird der Setzwiderstand gemindert und das Einschlagen des Ankers ist leichter durchführbar. Die Durchbrechung kann die Gestalt einer eingestanzten runden Bohrung haben. Dadurch erhält die Sicke eine zahnartige Form. Die äußere Kante der Bohrung wirkt als eine Sperrkante und hält die Spreizhülse im Bohrloch beim Einziehen des Spreizkonuses unverrückbar in radialer und axialer Richtung fest. Durch das Verzahnen der scharfen Kanten in die Bohrlochwandung wird die Spreizhülse stärker in der Bohrlochwandung verkrallt und somit fixiert.

Die Hülse bleibt beim Aufbringen des Drehmomentes stehen und der Bolzen wird in die Hülse gezogen.

Bei Ankern größeren Durchmessers ist es vorteilhaft, eine zusätzliche Durchbrechung im elastischen Bereich der Sicke anzubringen. Dadurch wird die Steifigkeit der Sicke noch stärker abgebaut und das Einschlagverhalten des Ankers weiter verbessert.

Dadurch, daß der vordere Halsabschnitt dünner als der hintere Halsabschnitt ist, ist dort der Spielraum zwischen der Spreizhülse und dem Hals vergrößert. Dies ermöglicht eine leichtere Verformung der Spreizhülse nach innen und eine bessere Anpassung der Spreizhülse an den Konuswinkel. Dies wiederum bewirkt das verbesserte Gleiten der Spreizhülse an dem Konus und sichert ein gleichmäßiges gutes Nachspreizverhalten im Falle einer Bohrlocherweiterung durch Rißbildung.

Die Erfindung wird nachfolgend anhand der Zeichnung näher erläutert.

Es zeigen:
- Figur 1: den erfindungsgemäßen Spreizanker in einer Seitenansicht
- Figur 2: einen Schnitt entlang der Linie II - II gemäß Figur 1
- Figur 3: den im Bohrloch gesetzten Spreizanker nach Figur 1 vor dem Aufbringen des Drehmoments
- Figur 4: den Spreizanker nach Figur 3 nach dem Aufbringen des Drehmoments
- Figur 5: eine Draufsicht auf einen Blechstreifen, mit ausgeprägten Sicken, zur Herstellung der Spreizhülse
- Figur 6: den Blechstreifen gemäß Figur 5 in einem Schnitt entlang der Linie X - X
- Figur 7: einen Querschnitt durch die Spreizhülse gemäß Figur 6 entlang der Linie Y - Y

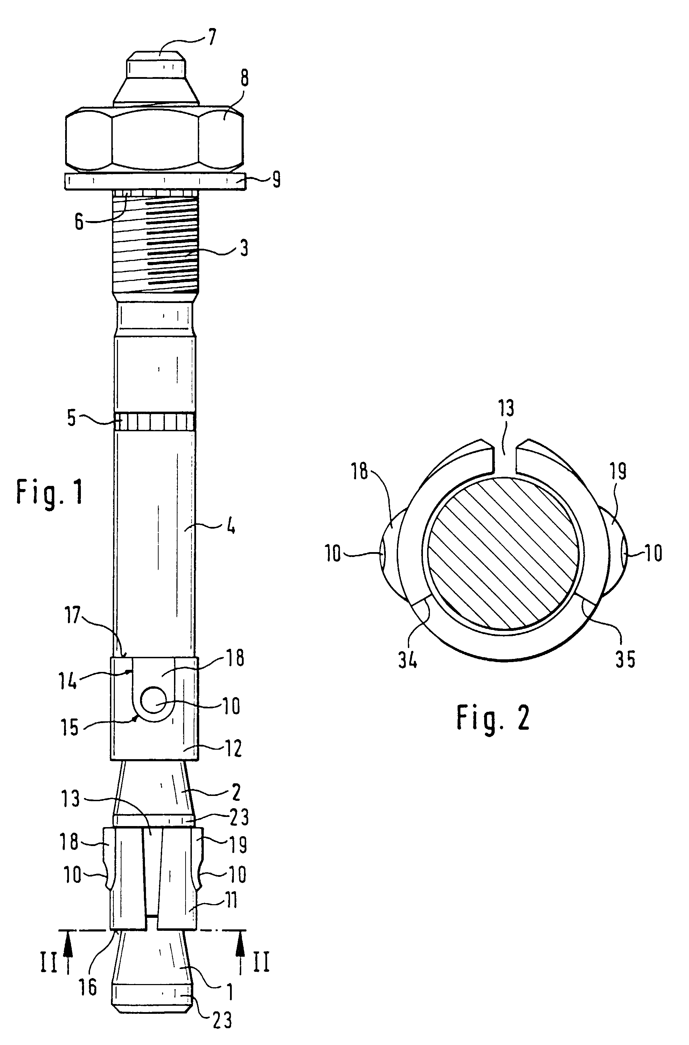

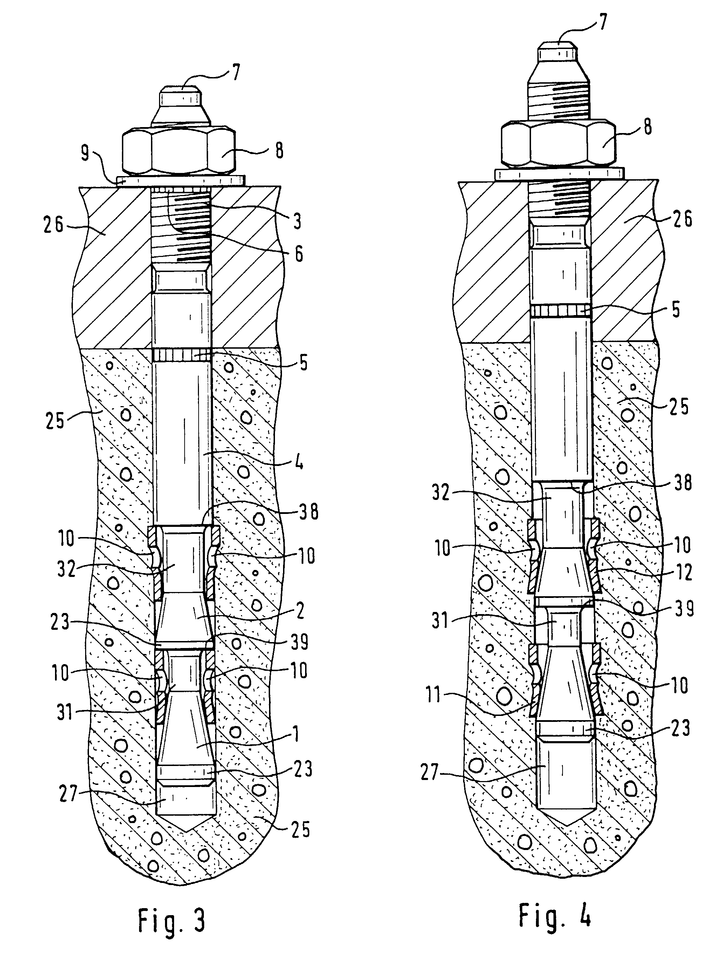

Der in Figur 1 dargestellte Spreizanker besteht aus einem Schaft 4, der an seinem hinteren Ende einen Gewindeabschnitt 3 zum Festspannen eines Gegenstandes aufweist. Im vorderen Bereich befindet sich ein abgesetzter Abschnitt 38, 39, wie die Figur 3 zeigt, an dem sich zum vorderen Ende hin jeweils ein Spreizkonus 1, 2 mit einer Überzugszone 23 anschließt. Im Bereich des Abschnitts 38, 39 ist eine Spreizhülse 11, 12 aufgesetzt. Die Spreizhülsen 11 und 12 sind jeweils aus einem Blechstreifen hergestellt, der zu einer Hülse mit einem durchgehenden axialen Schlitz 13 gebogen ist. Die Spreizhülsen 11 und 12 verfügen zusätzlich zum Schlitz 13 über zwei in Figur 2 dargestellte Einschnitte 34, 35, die sich, ausgehend vom vorderen Rand 16 der Spreizhülse, in axialer Richtung etwa bis zur Mitte der Spreizhülse erstrecken.

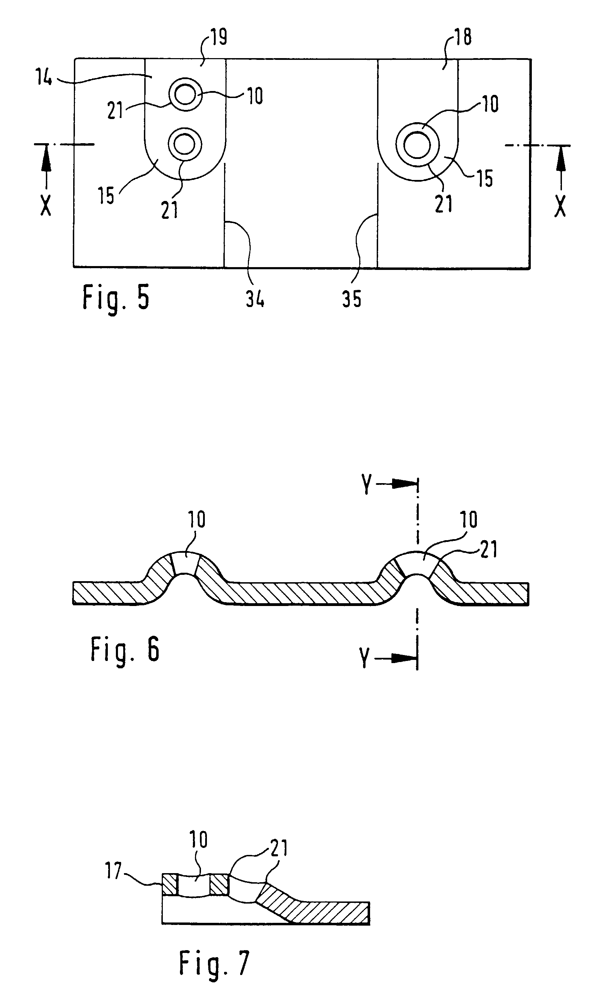

Vom hinteren Rand 17 der Spreizhülsen 11 und 12 ausgehend, erstrecken sich zwei in den Figuren 1 und 2 erkennbare Sicken 18, 19, die den Außenmantel des Schaftabschnittes 4 überragen. Die Sicken 18, 19 weisen eine oder mehrere Durchbrechungen 10 auf. Die Durchbrechungen 10 können die Gestalt einer eingestanzten runden Bohrung haben. Dadurch erhalten die Sicken 18, 19 eine zahnartige Form mit einer Sperrkante 21, wie die Figur 7 zeigt.

Die Durchbrechung 10 wird im vorderen Bereich 15 der Sicken 18, 19 angebracht. Als Setzhilfen verfügt der Spreizanker über die erste Markierung 5 und die zweite Markierung 6. In Figur 1 erkennt man weiterhin eine auf das hintere Ende 7 des Spreizankers aufgeschraubte Mutter 8 sowie eine Unterlegscheibe 9.

Die Figur 3 zeigt einen aus der Figur 1 bekannten Spreizanker, nach dem Eintreiben in ein zylindrisches Bohrloch 27, wobei die Spreizhülsen 11, 12 im Längsschnitt durch die Sicken 18, 19 dargestellt sind. In der Figur 3 erkennt man weiterhin Halsabschnitte 31, 32, die in die Spreizkonen 1, 2 übergehen. Der Durchmesser des Halsabschnitts 31 ist kleiner als der Durchmesser des Halsabschnitts 32. In Figur 3 erkennt man wie die Mantelfläche der Sicken 18, 19 bereits vor dem Aufspreizen der Spreizhülse einen guten Kontakt zur Bohrlochwandung bilden.

Das am Befestigungsgrund 25 zu befestigende Bauteil 26 wird mit Hilfe der Mutter 8 und Unterlegscheibe 9 gegen den Befestigungsgrund 25 angedrückt. Durch das Aufdrehen der Mutter 8 verbleiben die Spreizhülsen 11, 12 an ihren ursprünglichen Stellen im Bohrloch 27, während der Spreizanker mit seinem Spreizkonus 1, 2 durch axiale Verschiebung in die Spreizhülsen 11, 12 hineingezogen wird, wie die Figur 4 zeigt. Durch die unterschiedlichen Durchmesser der Halsabschnitte 31, 32 und das Anbringen der Bohrung 10 im steifen Bereich 15 der Sicken 18, 19 erfolgt ein leichtes Aufweiten der Spreizhülsen 11, 12. Dabei wird sich die äußere Kante 21 der Bohrung 10, dargestellt in Figur 5 und 6, in die Bohrlochwandung verzahnen und ein stärkeres Verkrallen der Spreizhülsen 11, 12 im Befestigungsgrund 25 bewirken.

Die Figur 5 veranschaulicht ein Blechstreifen mit erkennbaren Sicken 18, 19, Bohrungen 10 sowie Einschnitte 34, 35, aus dem die Spreizhülsen 11,12 hergestellt werden. Statt einer Bohrung 10 im vorderen Bereich 15 der Sicke 18 können beispielsweise zwei Bohrungen 10, wie die Sicke 19 zeigt, angebracht werden. Die zweite Bohrung 10 ist im hinteren Bereich 14 der Sicke angebracht.

## Patentansprüche

1. Spreizanker zur Verankerung in einem Bohrloch eines Bauteils, bestehend aus einem Schaft, der an seinem hinteren Ende Mittel zum Befestigen eines Gegenstandes und am vorderen Ende wenigstens zwei im Querschnitt reduzierte Abschnitte mit sich daran anschließenden Spreizkonen aufweist und jeweils über den reduzierten Halsabschnitt gestülpten Spreizhülse, die mit wenigstens zwei angebrachten radial nach außen gewölbten Sicken versehen ist, **dadurch gekennzeichnet,** daß die Sicken (18, 19) mit einer oder mehreren Durchbrechungen (10) versehen sind, und daß die Durchmesser der reduzierten Halsabschnitte (31, 32) unterschiedlich sind.

2. Spreizanker nach Anspruch 1, **dadurch gekennzeichnet**, daß die Durchbrechungen im steifen Bereich (15) der Sicken (18, 19) angebracht sind.

3. Spreizanker nach Anspruch 1, **dadurch gekennzeichnet**, daß die Durchbrechnungen (10) die Gestalt einer runden Bohrung haben.

4. Spreizanker nach Anspruch 3, **dadurch gekennzeichnet**, daß die Durchbrechungen (10) eine scharfe zahnförmige Kante (21) bilden.

5. Spreizanker nach Anspruch 1, **dadurch gekennzeichnet,** daß der Durchmesser des Halsabschnitts (31) kleiner als der Durchmesser des Abschnitts (32) ist.

## Claims

1. Expansible anchor for anchoring in a hole drilled in a component, consisting of a shank which at its rear end has means for fixing an article and at its leading end has at least two portions of reduced cross-section with adjoining expander cones, and, positioned over each reduced neck portion, an expansible sleeve on which are mounted at least two convex beads projecting radially outwards, characterized in that the beads (18, 19) are provided with one or more openings (10) and that the diameters of the reduced neck portions (31, 32) are different.

2. Expansible anchor according to claim 1, characterized in that the openings are provided in the rigid region (15) of the beads (18, 19).

3. Expansible anchor according to claim 1, characterized in that the openings (10) are in the form of a circular bore.

4. Expansible anchor according to claim 3, characterized in that the openings (10) form a sharp tooth-shaped edge (21).

5. Expansible anchor according to claim 1, characterized in that the diameter of the neck portion (31) is smaller than the diameter of the portion (32).

## Revendications

1. Dispositif d'ancrage expansible pour ancrer un composant dans un trou obtenu par perçage, constitué d'un fût qui présente, à son extrémité arrière, des moyens pour fixer un objet et, à son extrémité avant, au moins deux tronçons de section réduite avec des cônes d'expansion qui s'y raccordent et, pour chacun, une douille expansible qui s'emboîte sur le tronçon formant col, de diamètre réduit, et présente au moins deux soyages bombés radialement vers l'extérieur qui y sont prévus, caractérisé par le fait que les soyages (18,19) présentent un ou plusieurs evidements (10) et que les diamètres des tronçons formant col, de diamètre réduit, (31, 32) sont différents.

2. Dispositif d'ancrage expansible selon la revendication 1, caractérisé par le fait que les évidements sont prévus dans la zone rigide (15) des soyages (18, 19).

3. Dispositif d'ancrage expansible selon la revendication 1, caractérisé par le fait que les évidements (10) ont la forme d'un perçage rond.

4. Dispositif d'ancrage expansible selon la revendication 3, caractérisé par le fait que les évidements (10) forment une arête vive en forme de dent (21).

5. Dispositif d'ancrage expansible selon la revendication 1, caractérisé par le fait que le diamètre du tronçon, formant col (31) est inférieur à celui du tronçon (32).
